# EUROPÄISCHE PATENTANMELDUNG

(11) **EP 1 274 062 A2**
(43) Veröffentlichungstag der Anmeldung: **08.01.2003**
(21) Anmeldenummer: 02100771.1
(22) Anmeldetag: 01.07.2002
(51) Int. Cl.: G09F 9/33, G09F 9/35

(54) **Elektronisches Gerät**

(30) Priorität: 06.07.2001 DE 10132812
(71) Anmelder: SIEMENS AKTIENGESELLSCHAFT, 80333 München (DE)
(72) Erfinder: Radermacher, Klaus, 46509, Xanten (DE); Volland, Rainer, 80469, München (DE); Windisch, Stephan, 85464, Neufinsing (DE)

(57) **Zusammenfassung**

Ein elektronisches Gerät, bei dem es sich insbesondere um ein Mobiltelefon oder ein anderes tragbares elektronisches Gerät handeln kann, wird mit zwei Anzeigeeinheiten versehen, welche verschiedene Leistungsaufnahmen aufweisen. Außerdem umfaßt das Gerät eine Prozessoreinrichtung zur Versetzung des elektronischen Gerätes in verschiedene Betriebzustände, und zur Ansteuerung der Anzeigeeinheiten derart, daß betriebszustandsabhängig die Anzeigeeinheit mit der größeren Leistungsaufnahme aktiviert bzw. deaktiviert wird.

## Beschreibung

Die Erfindung betrifft ein elektronisches Gerät mit zwei Anzeigeeinheiten.

Die rasante technische Entwicklung auf dem Gebiet der Mobilkommunikation hat in den letzten Jahren zur Entwicklung und Bereitstellung einer Vielzahl verschiedener Mobiltelefone geführt. Es ist bekannt für derartige Mobiltelefone einen Bereitschaftsbetrieb vorzusehen, in dem der aktuelle Akkuladezustand, die aktuelle Empfangsfeldstärke und/oder der Netzbetreiber (Provider) auf einem passiven LCD-Display dargestellt wird. Derartige sogenannte Flüssigkristallanzeigen (engl.: "Liquid Crystal Displays", LCD) bieten insbesondere den Vorteil eines geringen Stromverbrauchs; nachteilig an passiven LCD-Displays sind allerdings deren relativ lange Reaktionszeiten und die damit verbundene eingeschränkte Fähigkeit, Videosequenzen, insbesondere in einem weiten Temperaturbereich, darzustellen.

Noch in der Forschung befinden sich dagegen neuartige lichtaussendende Materialien aus organischen Komponenten. Diese Materialien sind unter der englischen Bezeichnung "Organic Light-Emitting Diode" (OLED) bekannt. In der Entwicklung befinden sich zwei unterschiedliche Materialklassen, die einmal auf Polymere (PLED und einmal auf kleinen organischen Molekülen (OLED) beruhen. Im folgenden werden beide Materialklassen mit OLED bezeichnet. OLED-Displays sind den heute weitverbreiteten Flüssigkristallanzeigen (LCD-Displays) in vielen Aspekten überlegen, da sie heller leuchten und eine schnellere Bildabfolge (Video) ermöglichen. So sind mit Hilfe von OLED-Displays (monochrom oder farbig) beispielsweise eine größere Helligkeit und Bildschärfe, ein stärkerer Kontrast sowie eine höhere Bildauflösung erzielbar. OLED-Displays haben jedoch im Vergleich zu LCD-Displays den Nachteil, daß sie eine deutlich größere Leistungsaufnahme und damit einen höheren Stromverbrauch aufweisen als konventionelle LCD-Displays. Dies würde beispielsweise beim Einsatz eines OLED-Displays an Stelle eines LCD-Displays in einem Mobiltelefon zu einer erheblich kürzeren Bereitschafts-Dauer (stand-by-Zeit) des Mobiltelefons führen.

Der Erfindung liegt daher die Aufgabe zugrunde, ein elektronisches Gerät anzugeben, das eine optisch hochwertige Anzeigeeinheit und einen geringen Stromverbrauch aufweist.

Diese Aufgabe wird durch die Merkmale des unabhängigen Anspruchs gelöst. Vorteilhafte und zweckmäßige Weiterbildungen ergeben sich aus den abhängigen Ansprüchen.

Erfindungsgemäß wird also das elektronische Gerät, bei dem es sich insbesondere um ein Mobiltelefon oder ein anderes tragbares elektronisches Gerät handeln kann, mit zwei Anzeigeeinheiten versehen, welche verschiedene Leistungsaufnahmen aufweisen. Außerdem umfaßt das Gerät eine Prozessoreinrichtung zur Versetzung des elektronischen Gerätes in verschiedene Betriebzustände, und zur Ansteuerung der Anzeigeeinheiten derart, daß betriebszustandabhängig die Anzeigeeinheit mit der größeren Leistungsaufnahme aktiviert bzw. deaktiviert wird.

Insbesondere wenn die erste Anzeigeeinheit eine geringere Bildauflösung, eine geringere Helligkeit und/oder eine geringere Kontrastfähigkeit als die zweite Anzeigeeinheit aufweist, wird dadurch erreicht, daß das elektronische Gerät insgesamt eine geringe Leistungsaufnahme aufweist und dennoch in bestimmten Betriebszuständen eine Darstellung von Informationen mit hoher Bildauflösung, großer Helligkeit und/oder starken Kontrasten und Videodarstellung möglich ist.

Auch eine zusätzliche betriebszustandabhängige Aktivierung oder Deaktivierung der Anzeigeeinheit mit der kleineren Leistungsaufnahme liegt im Rahmen der Erfindung.

Die Erfindung wird im Folgenden anhand bevorzugter Ausführungsbeispiele näher beschrieben, zu deren Erläuterung nachstehend aufgelistete Figuren dienen:
- Figur 1: Blockschaltbild einer Mobilstation;
- Figur 2: Prinzipdarstellung zweier Anzeigeeinheiten einer Mobilstation;
- Figur 3: Prinzipdarstellung eines LCD-Displays und eines OLED-Displays auf einem gemeinsamen Glassubstrat.

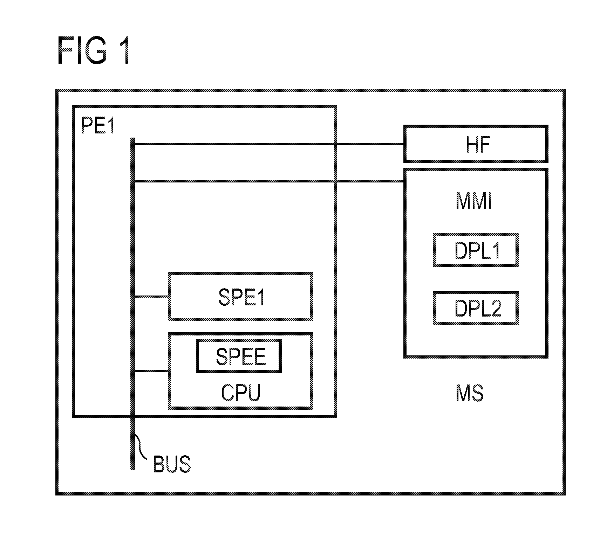

Figur 1 zeigt eine Mobilstation MS (Mobiltelefon), welche eine Bedieneinrichtung MMI eine Hochfrequenzeinrichtung HF und eine Prozessoreinrichtung PE1 enthält. Die Bedieneinrichtung MMI umfaßt eine erste Anzeigeeinheit DPL1, insbesondere ein LCD-Display, die eine erste Leistungsaufnahme aufweist, eine zweite Anzeigeeinheit DPL2, insbesondere ein OLED-Display, die eine zweite Leistungsaufnahme aufweist, wobei die zweite Leistungsaufnahme größer als die erste Leistungsaufnahme ist, und eine Eingabeeinrichtung, die beispielsweise Tasten oder Softkeys umfaßt. Die Bedieneinrichtung MMI kann auch teilweise als Touchscreen ausgebildet sein. Über eine Signalausgabeeinrichtung kann zur Signalisierung eines ankommenden Anrufes eine Ruftonmelodie ausgegeben werden.

Zur Steuerung der Mobilstation MS, zur Ansteuerung der Anzeigeeinheiten und der Verfahren, welche durch die Mobilstation ausgeführt werden, ist eine programmgesteuerte Prozessoreinrichtung PE1, wie beispielsweise ein Mikrocontroller vorgesehen, der auch einen Prozessor CPU und eine Speichereinrichtung SPE1 umfassen kann.

Je nach Ausführungsvariante können dabei innerhalb oder außerhalb der Prozessoreinrichtung PE1 weitere - der Prozessoreinrichtung zugeordnete, zur Prozessoreinrichtung gehörende, durch die Prozessoreinrichtung gesteuerte oder die Prozessoreinrichtung steuernde - Komponenten, wie beispielsweise ein digitaler Signalprozessor oder weitere Speichereinrichtungen angeordnet sein, deren prinzipielle Funktion im Zusammenhang mit einer Prozessoreinrichtung zur Steuerung einer Mobilstation einem Fachmann hinreichend bekannt ist, und auf welche daher an dieser Stelle nicht näher eingegangen wird. Die unterschiedlichen Komponenten können über ein Bussystem BUS oder Ein-/Ausgabeschnittstellen und gegebenenfalls geeignete Controller mit dem Prozessor CPU Daten austauschen.

Je nach Ausführungsvariante kann die Speichereinrichtung SPE1, bei der es sich auch um einen oder mehrere flüchtige und/oder nicht flüchtige Speicherbausteine handeln kann, oder Teile der Speichereinrichtung SPE1 als Teil der Prozessoreinrichtung PE1 (in Figur dargestellt) realisiert sein oder als externe Speichereinrichtung (in Figur nicht dargestellt) realisiert sein, die außerhalb der Prozessoreinrichtung PE1 lokalisiert ist und mittels geeigneter Schnittstellen oder eines geeigneten Bussystems mit der Prozessoreinrichtung PE1 verbunden ist.

In der Speichereinrichtung SPE1 sind die Programmdaten, wie beispielsweise die Steuerbefehle oder Steuerprozeduren, die zur Steuerung der Mobilstation und zur Versetzung der Mobilstation in verschiedene Betriebszustände herangezogen werden, gespeichert. Darüber hinaus sind in der Speichereinrichtung SPE1 Konfigurationsdaten abgespeichert, welche die Aktivierung bzw. Deaktivierung der Anzeigeeinheiten in Abhängigkeit von den Betriebszuständen der Mobilstation beschreiben.

Im folgenden sind beispielhaft Ausführungsvarianten zur Ansteuerung der Anzeigeeinheiten LCD-Display und OLED-Display in Abhängigkeit vom Betriebszustand eines Mobiltelefons beschrieben, welche einzeln aber auch in beliebigen Kombinationen durch die Erfindung umfaßt sind:

Das ausgeschaltete Mobiltelefon wird durch die Betätigung einer entsprechenden Taste eingeschaltet und somit vom Aus-Zustand in den Ein-Zustand versetzt. Dadurch wird automatisch das OLED-Display aktiviert. Zusätzlich ist in einer Ausgestaltung mit dem Einschalten des Mobiltelefons die Aktivierung des LCD-Displays verbunden.

Im Ein-Zustand kann sich das Mobiltelefon in einem Ruhe-Zustand oder in einem Bedien-Zustand befinden. Bei dem Ruhe-Zustand kann es sich dabei um einen Grundzustand handeln, in dem sich das Mobiltelefon befindet, wenn keine aktuellen Eingaben oder Ausgaben mittels der Bedieneinheit erfolgen. Der Ruhezustand kann dadurch definiert sein, daß zumindest eine der folgenden Informationen dargestellt wird: Netzbetreiber-Kennung des Mobilfunknetzes, in das das Mobiltelefon augenblicklich eingebucht ist, Akkuladezustand, Uhrzeit, Datum und/oder Empfangsfeldstärke. Diese Informationen werden gemäß einer Weiterbildung der Erfindung auf dem LCD-Display dargestellt, das im Ruhe-Zustand aktiviert ist; das OLED-Display ist dagegen im Ruhe-Zustand deaktiviert.

Je nach Ausführungsform wird durch eine oder mehrere der folgenden Aktionen das Mobiltelefon vom Ruhe-Zustand in den Bedien-Zustand versetzt: Betätigung einer Taste, Eingehen eines Anrufes, Signalisierung eines eingehenden Anrufes, Ausgabe einer Ruftonmelodie, Annahme eines Anrufes, Einsetzen des Mobiltelefons in eine Ladeschale, Abfrage bzw. Aufruf einer empfangenen Textnachricht, Abfrage bzw. Aufruf einer empfangenen Multimedia-Nachricht und/oder Abfrage bzw. Aufruf einer empfangenen Video-Nachricht.

Gemäß einer Weiterbildung der Erfindung wird durch die Versetzung des Mobiltelefons vom Ruhe-Zustand in den Bedien-Zustand automatisch die Aktivierung des OLED-Displays ausgelöst. Im Bedien-Zustand wird eine oder mehrere der folgenden Informationen anhand des OLED-Displays dargestellt: abgefragte Textnachricht, Multimedia-Nachricht oder Video-Nachricht, die Rufnummer bzw. der Name eines Anrufers, Menüpunkte, mittels der Eingabeeinrichtung eingegebene Ziffern oder Buchstaben.

Eine Weiterbildung der Erfindung sieht vor, daß der Benutzer aus den obengenannten Aktionen eine Auswahl treffen kann und das OLED-Display nur beim Auftreten einer dieser ausgewählten Aktionen aktiviert wird. Zusätzlich kann vorgesehen sein, in diesem Fall bestimmte obengenannte Informationen, wie beispielsweise eine Textnachricht, die Rufnummer oder den Namen eines Anrufers oder Menüpunkte anhand des LCD-Displays darzustellen; eine Aktivierung des OLED Displays kann in diesem Fall unterbleiben.

Eine andere Weiterbildung der Erfindung sieht vor, daß mit jeder Aktion, die die Versetzung des Mobiltelefons von dem Ruhe-Zustand in den Bedien-Zustand auslöst, eine Zeitmessung gestartet wird und nach Ablauf einer vorbestimmten Zeitspanne ohne eine weitere derartige Aktion, das OLED-Display deaktiviert wird. Gemäß einer Weiterbildung wird die Zeitmessung dabei bei jeder derartigen Aktion neu gestartet, unabhängig davon, ob sich das Mobiltelefon im Ruhe-Zustand oder im Bedien-Zustand befindet.

Im folgenden ist beispielhaft ein möglicher Ablauf für Betriebszustandswechsel und entsprechende Aktivierung bzw. Deaktivierung von Displays beschrieben:

Zunächst befindet sich das Mobiltelefon im Auszustand. Durch das Betätigen der EIN-Taste wird das Mobiltelefon in den Ein-Zustand und den Bedien-Zustand versetzt und damit das LCD-Display und das OLED-Display aktiviert. Auf dem LCD-Display wird der aktuelle Akkuladezustand angezeigt. Auf dem OLED Display werden die zur Benutzeridentifizierung vorgesehenen Informationen, wie beispielsweise der Text "Geben Sie Ihre PIN ein" dargestellt. Erfolgt nun innerhalb von 15 Sekunden keine weitere Tastenbetätigung, beispielsweise zur PIN-Eingabe, so wird das OLED-Display deaktiviert und somit das Mobiltelefon in den Ruhe-Zustand versetzt. Betätigt der Benutzer 20 Sekunden nach der letzten Tastenbetätigung eine beliebige Taste, so wird zunächst das OLED-Display aktiviert; mit dieser oder/und weiteren Tastenbetätigungen wird dann die PIN eingegeben und bestätigt. Nun wird das Mobiltelefon in das Mobilfunknetz eines Netzbetreibers (Provider) eingebucht, worauf eine Kennung des Netzbetreibers und die aktuelle Empfangsfeldstärke auf dem LCD-Display dargestellt wird. 15 Sekunden nachdem die Benutzeridentifizierung durch die Betätigung einer entsprechenden Bestätigungstaste abgeschlossen worden ist, wird das OLED-Display deaktiviert. Wird nun mittels der Tastatur die Rufnummer 089 636 87771 eingegeben, so wird mit der Betätigung der "0"-Taste das OLED-Display aktiviert und entweder die "0" auf dem OLED-Display dargestellt oder erst mit einer nochmaligen Betätigung der "0"-Taste "0" auf dem OLED-Display dargestellt. Erfolgt nun innerhalb von 15 Sekunden nach der Betätigung der "0"-Taste keine weitere Tastaturbetätigung, so wird das OLED-Display deaktiviert. Wird dagegen oben genannte Rufnummer ohne längere Unterbrechung eingegeben, so wird das OLED-Display erst 15 Sekunden nach Eingabe der "1" bzw. falls erforderlich nach Betätigung einer entsprechenden Bestätigungstaste deaktiviert. Alternativ dazu ist das OLED-Display nach der Eingabe einer Telefonnummer bis 15 Sekunden nach Abbruch der Verbindung bzw. des Verbindungsaufbaus aktiviert. Wird im Ruhe-Zustand des Mobiltelefons ein eingehender Anruf oder eine eingehende Kurznachricht beispielsweise durch eine Tonrufmelodie signalisiert, so erfolgt zudem automatisch eine Aktivierung des OLED-Displays. 15 Sekunden nach Beginn oder Ende der Signalisierung wird das OLED-Display deaktiviert; falls allerdings der eingehende Anruf durch den Nutzer des Mobiltelefons angenommen wird, so wird das OLED-Display erst 15 Sekunden nach Annahme oder 15 Sekunden nach Gesprächsende deaktiviert.

Eine Weiterbildung der Erfindung sieht vor, daß die Deaktivierung des OLED-Displays durch die Betätigung einer Tastatursperre ausgelöst wird.

Eine andere Weiterbildung sieht vor, daß die vorbestimmte Zeitspanne, nach deren Ablauf die zweite Anzeigeeinheit deaktiviert wird, durch den Benutzer einstellbar ist.

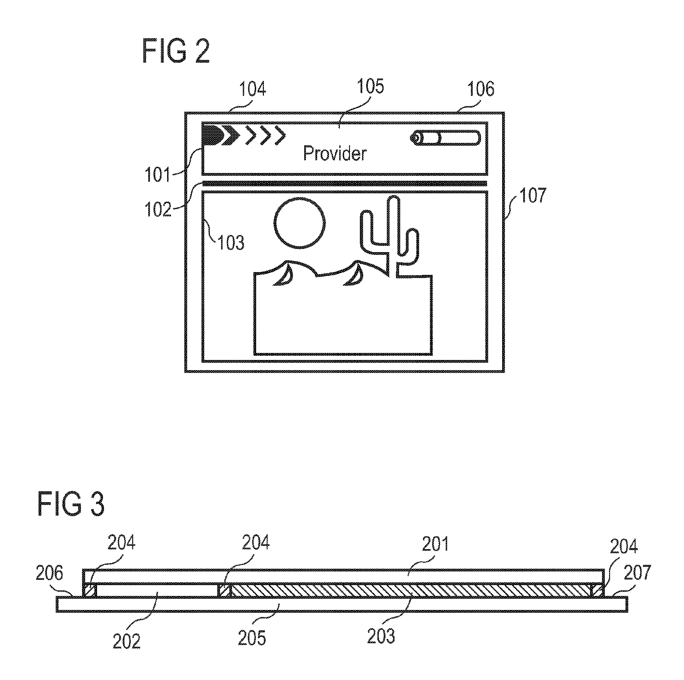

In Figur 2 ist ein Ausführungsbeispiel skizziert, das eine Anordnung zweier Anzeigeeinheiten 101,103 unterschiedlicher Bauart und Funktion zeigt, die beispielsweise in der Oberseite des Gehäuses eines Mobiltelefons integriert sind. Bei der oberen Anzeigeeinheit 101 handelt es sich um ein LCD-Display, das beispielsweise eine monochromatische Standardanzeige in Form einer Punktmatrix mit niedriger Auflösung ermöglicht. Dabei wird die aktuelle Empfangsfeldstärke 104, der Name des Netzbetreibers (Provider) 105 sowie der momentane Ladungszustand 106 der Akkus als Grafiksymbole bzw. als Text angezeigt. Bei der unteren Anzeigeeinheit 103 handelt es sich um ein OLED-Display, das zur Darstellung von qualitativ hochwertigen Schwarz-Weiß- bzw. Farb-Grafiken mit hoher Auflösung und großem Helligkeitsspektrum geeignet ist. Die beiden Anzeigeeinheiten 101, 103 werden durch eine elektrisch isolierende Trennschicht 102 voneinander getrennt.

Figur 3 zeigt eine Anordnung zweier Anzeigeeinheiten unterschiedlicher Bauart, welche auf einem gemeinsamen Träger, insbesondere einer Glasplatte 205, aufgebracht sind. Bei diesen beiden Anzeigeeinheiten handelt es sich um ein LCD-Display und ein OLED-Display. Zwischen der Substratschicht 202 für das LCD-Display und der Substratschicht 203 für das OLED-Display und um diese Substratschichten herum ist ein elektrisch isolierendes Material 204 aufgetragen, das als Trennschicht zwischen den Substratschichten 202,203 bzw. als Versiegelung nach außen wirkt. Als obere Abdeckung der Substratschichten 202,203 und der Trennschichten 204 ist in dem vorliegenden Ausführungsbeispiel eine weitere Glasschicht 201 zur Versiegelung der aktiven Schichten angeordnet. Die Anschlusskontakte und die elektrisch leitenden Verbindungen 206,207 zur LCD-Substratschicht 202 bzw. zur OLED-Substratschicht 203 befinden sich am Rand der Oberseite der unteren Glasplatte 205.

## Patentansprüche

1. Elektronisches Gerät (MS)
- mit einer ersten Anzeigeeinheit (DPL1), die eine erste Leistungsaufnahme aufweist,
- mit einer zweiten Anzeigeeinheit (DPL2), die eine zweite Leistungsaufnahme aufweist, wobei die zweite Leistungsaufnahme größer als die erste Leistungsaufnahme ist,
- mit einer Prozessoreinrichtung (PE1) zur Versetzung des elektronischen Gerätes in verschiedene Betriebszustände, und zur Ansteuerung der Anzeigeeinheiten derart, daß betriebszustandsabhängig die zweite Anzeigeeinheit (DPL2) aktiviert bzw. deaktiviert wird.

2. Elektronisches Gerät nach Anspruch 1,
- bei dem die erste Anzeigeeinheit ein LCD-Display umfaßt.

3. Elektronisches Gerät nach einem der Ansprüche 1 oder 2,
- bei dem die zweite Anzeigeeinheit ein OLED- oder ein PLED-Display umfaßt.

4. Elektronisches Gerät nach einem der vorhergehenden Ansprüche, bei dem die erste und die zweite Anzeigeeinheit mittels des selben Glassubstrates realisiert sind.

5. Elektronisches Gerät nach einem der vorhergehenden Ansprüche,
- mit einer Prozessoreinrichtung zur Versetzung des Gerätes in einen Aus-Zustand und einen Ein-Zustand, wobei die zweite Anzeigeeinheit bei Versetzung des Gerätes in den Ein-Zustand automatisch aktiviert wird.

6. Elektronisches Gerät nach einem der vorhergehenden Ansprüche,
- mit einer Prozessoreinrichtung zur Versetzung des Gerätes in einen Ruhe-Zustand und einen Bedien-Zustand, wobei die zweite Anzeigeeinheit bei Versetzung des Gerätes in den Bedien-Zustand automatisch aktiviert wird.

7. Elektronisches Gerät nach einem der vorhergehenden Ansprüche,
- mit einer Prozessoreinrichtung welche derart eingerichtet ist, daß eine aktivierte zweite Anzeigeeinheit nach Ablauf einer vorbestimmten Zeitspanne deaktiviert wird.

8. Elektronisches Gerät nach Anspruch 7
- mit einer Eingabeeinrichtung,
- bei dem die vorbestimmte Zeitspanne durch die Betätigung der Eingabeeinrichtung, insbesondere einer Taste der Eingabeeinrichtung, ausgelöst wird.

9. Elektronisches Gerät nach Anspruch 7
- mit einer Signalausgabeeinrichtung,
- bei dem die vorbestimmte Zeitspanne durch die Aktivierung der Signalausgabeeinrichtung ausgelöst wird.
